# EUROPÄISCHE PATENTSCHRIFT

(11) **EP 0 764 399 B1**
(45) Veröffentlichungstag und Bekanntmachung des Hinweises auf die Patenterteilung: **11.07.2001**
(21) Anmeldenummer: 96114793.1
(22) Anmeldetag: 16.09.1996
(51) Int. Cl.: A01D 34/49

(54) **Vertikutier- und/oder Mähmaschine**
Mowing and/or aerating machine
Machine à faucher et/ou à aérer

(30) Priorität: 22.09.1995 DE 19535362; 22.09.1995 DE 19535363
(43) Veröffentlichungstag der Anmeldung: 26.03.1997
(73) Patentinhaber: Amazone Machines Agricoles S.A., F-57602 Forbach (FR)
(72) Erfinder: Schomäker, Wilfried, 26160 Bad Zwischenahn (DE); Klein, Laurent, 57350 Spicheren (FR); Pfisterer, Thomas, 66386 St. Ingbert (DE)

(56) Entgegenhaltungen:
- EP-A- 0 685 148
- DE-A- 4 222 214
- FR-A- 1 270 757
- FR-A- 1 439 552
- FR-A- 2 514 987
- GB-A- 2 092 086
- US-A- 2 653 701
- US-A- 2 947 129
- US-A- 3 641 754

## Beschreibung

Die Erfindung betrifft eine Vertikutier- und/oder Mähmaschine gemäß des Oberbegriffes des Patentanspruches 1.

Eine derartige Maschine ist durch die französische Patentschrift 25 14 987 bekannt. Diese Maschine weist eine Mäh- und/oder Vertikutiereinrichtung auf. Der Mäh- und/oder Vertikutiereinrichtung ist eine Förderschnecke zugeordnet, die das Gut einer Längsförderschnecke zufördert. Über die Längsförderschnecke wird das Gut in einen Sammelbehälter gefördert. Die Querförderschnecke ist in einem Fördertrog angeordnet. Das von der Mäh- oder Vertikutiertrommel gemähte oder geförderte Gut wird von dieser auf die Förderschnecke bzw. in den Fördertrog geworfen. Praktische Einsätze haben gezeigt, daß die Übergabe des Gutes von der Trommel zur Querförderschnecke bzw. zu dem Fördertrog vor allem bei schwereren oder nassen Einstatzverhältnissen nicht zufriedenstellend ist.

Der Erfindung liegt die Aufgabe zugrunde, auf einfache Weise eine ausreichend gute Übergabe des Gutes an die Querförderschnecke bzw. in den Querfördertrog zu erreichen.

Diese Aufgabe wird erfindungsgemäß durch die kennzeichnenden Merkmale des Anspruches 1 gelöst. Infolge dieser Maßnahmen wird eine ausreichend lange Trennstrecke des Mäh- und Vertikutiergutes vom Luftstrom erreicht. Somit wird die Übergabe erheblich verbessert. In bevorzugter Weise ist vorgesehen, daß die Übergabeplatte in der Mitte eine größere Breite als an den Außenseiten aufweist. Dieses bedeutet, daß die Übergabeplatte in den Randbereichen gegenüber der Mitte heruntergezogen ist. Somit wird die Aufsammelqualität im äußeren seitlichen Bereich wesentlich gegenüber einem eine horizontal verlaufende Kante aufweistden Fördertrog verbessert. Weiterhin kann die Querförderschnecke das Gut optimal in den mittleren Bereich fördern, da die Übergabeplatte in der Maschinenmitte die größte Ausdehnung aufweist. Die Platte steigt zur Maschinenmitte hin nach oben an. Somit ist die Ausbildung des Fördertroges durch die Form des Übergabeelementes an die Fördermenge der Förderschnecke über deren Förderweg angepaßt. Die Querschnecke hat im mittleren Bereich mehr Volumen zu fördern als außen. Da das Übergabeelement am Übergabepunkt von Quer- zur Längsförderschnecke eine sehr breite, sich in den Rotorraum der Mähtrommel erstreckende Verbreiterung aufweist, wird vor allem bei leichtem Mähgut, eine ausreichend große Trennstrecke des Mähgutes vom Luftstrom erzielt. Das Übergabeelement kann als Platte oder Formkörper ausgebildet sein.

Desweiteren ist vorgesehen, daß die Übergabeplatte sich in Richtung der Mäh- und/oder Vertikutiertrommel oberhalb dieser schräg nach oben erstreckt. Somit ergibt sich eine vorteilhafte Anordnung der Übergabeplatte.

Um die Funktion der Übergabeplatte optimal an das jeweils zu mähende Mäh- und Vertikutiergut bzw. die vorherrschenden Mäh- und Vertikutierbedingungen angepaßt werden kann, ist vorgesehen, daß der Zwischenraum zwischen der oberen Leitpaltte und/oder Haube der Mäh- und Vertikutiertrommel und der Übergabeplatte durch Verschieben der Übergabeplatte einstellbar angeordnet ist.

Um eine gute Übergabe des Gutes von der Quer- zur Längsförderschnecke zu gewährleisten, ist vorgesehen, daß die Querförderschnecke jeweils an den Außenenden zur Mitte hin entgegengesetzt verlaufende Schneckengänge aufweist, daß die Enden der Schneckengänge in der Mitte der Querförderschnecke um 180° versetzt zueinander angeordnet sind, daß an den Enden jedes Schneckenganges sich parallel zur Drehachse der Querschnecke verlaufende Abgabeplatten angeordnet sind. Infolge dieser Maßnahmen wird durch die Abgabeplatten erreicht, daß das von der Querförderschnecke zur Mitte in den Übergabebereich zur Längsförderschnecke geförderte Gut sicher und kontinuierlich der Längsförderschnecke zugeführt wird. Hierdurch wird eine gute Übergabe des Gutes von der Querförderschnecke zur Längsförderschnecke erreicht.

Die Abgabeplatten sind im Übergabebereich von der Querförderschnecke zur Längsförderschnecke angeordnet.

Als vorteilhaft hat sich herausgestellt, daß die Abgabeplatten im Bereich des Schneckenganges eine Höhe aufweisen, die der Höhe des Schneckenganges entspricht und von hieraus von der oberen Kante des Schneckenganges schrägabfallen angeordnet sind.

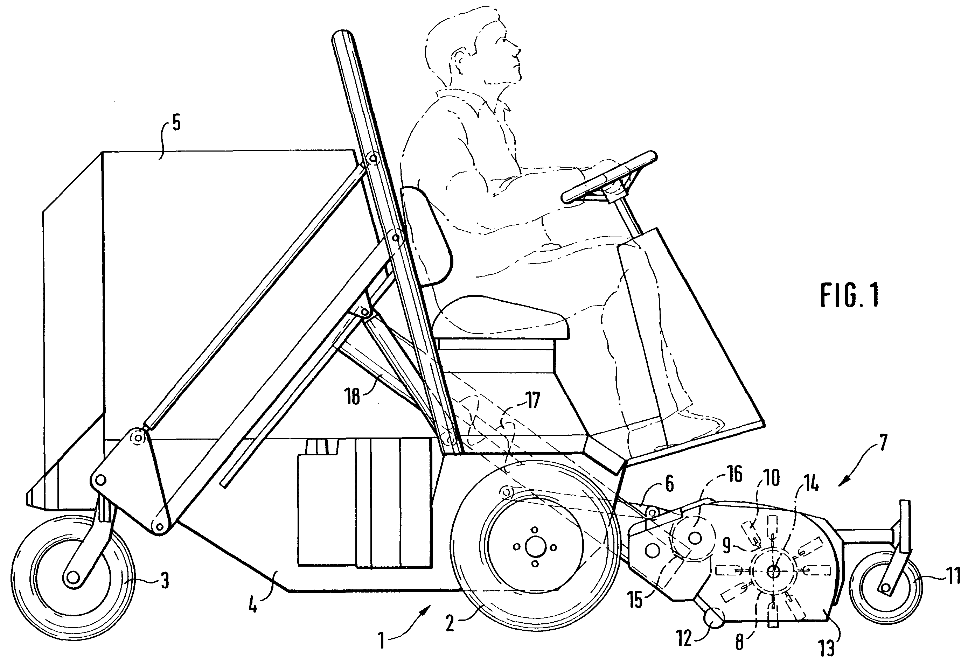

Weitere Einzelheiten der Erfindung sind den übrigen Unteransprüchen, der Beispielsbeschreibung und den Zeichnungen zu entnehmen. Hierbei zeigen
- Fig. 1: die Mäh- und/oder Vertikutiermaschine in Seitenansicht und in Prinzipdarstellung,

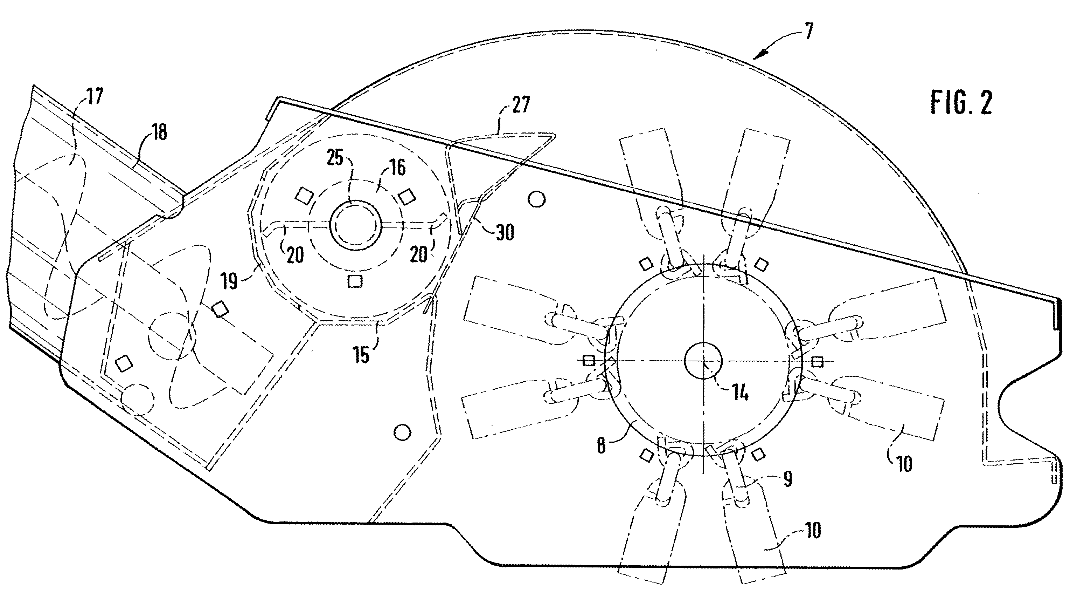

- Fig. 2: die Mäh- und/oder Vertikutiereinrichtung in Seitenansicht, in Prinzipdarstellung und einem anderen Maßstab,

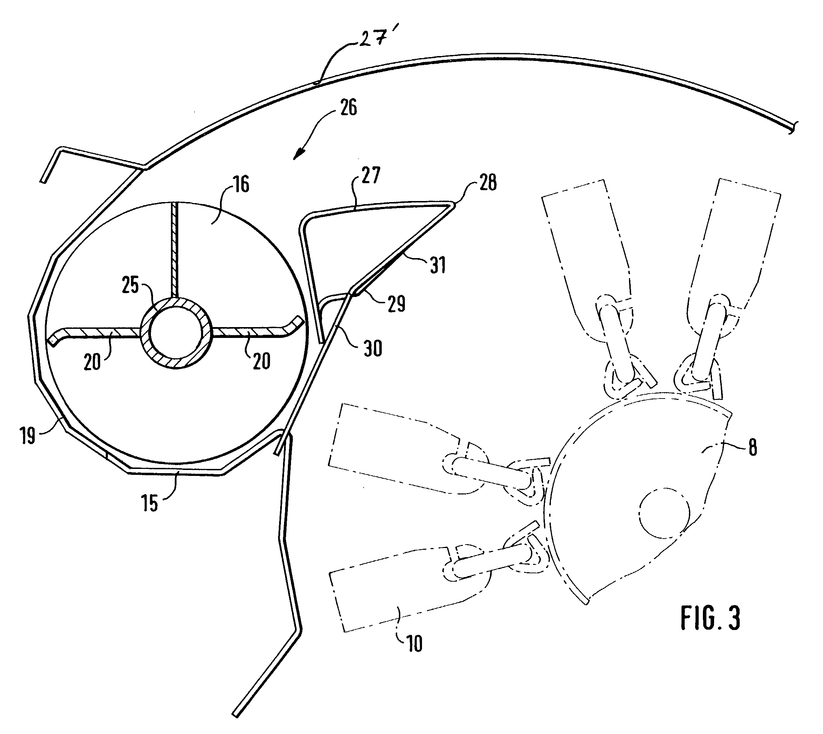

- Fig. 3: die Querförderschnecke mit Übergabeplatte und Mähtrommel in einem größeren Maßstab,

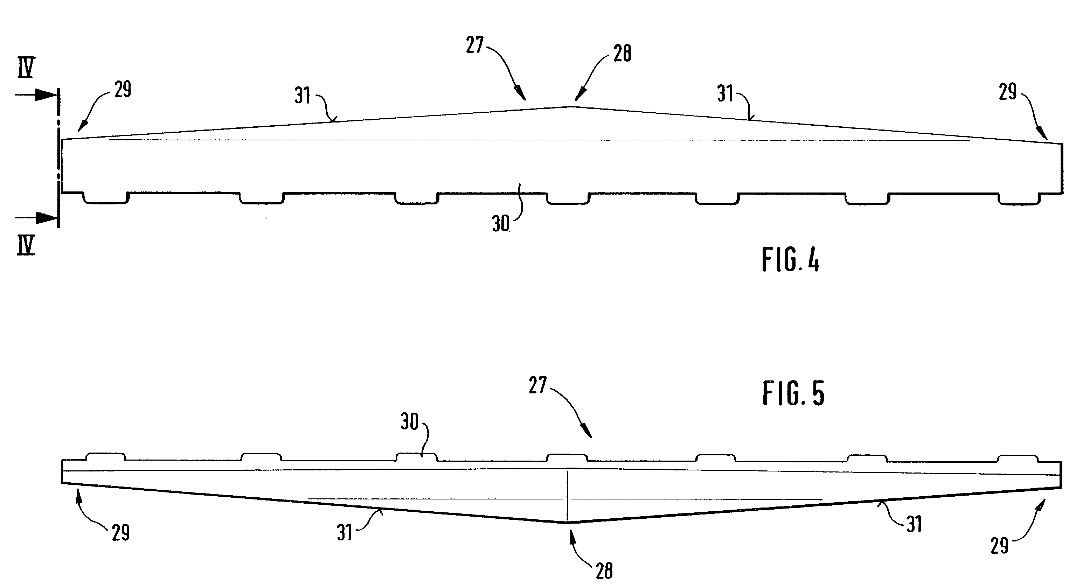

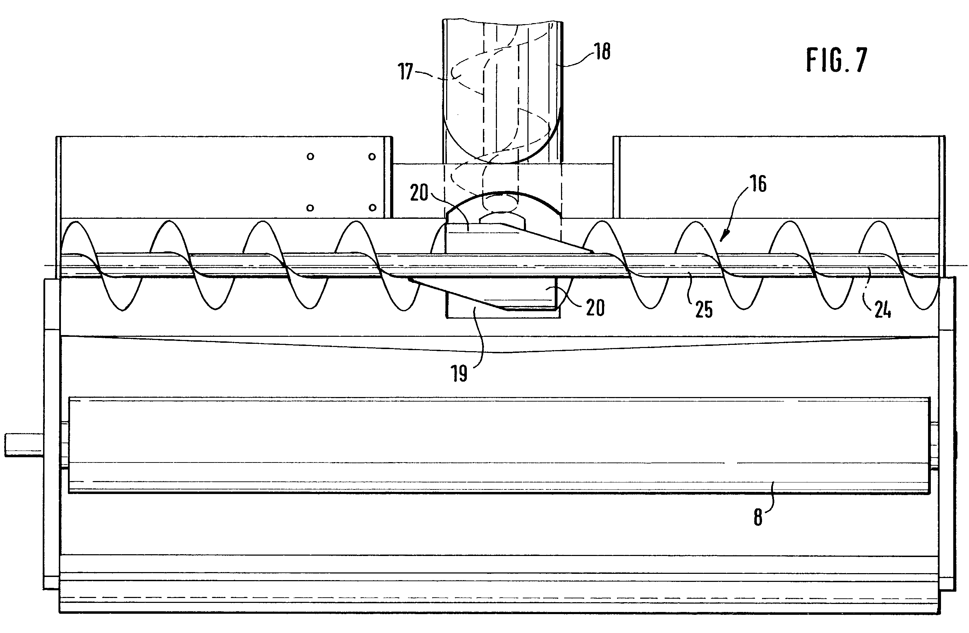

- Fig. 4: das Übergabeelement in der Ansicht von vorne,
- Fig. 5: die Übergabeplatte in der Draufsicht,

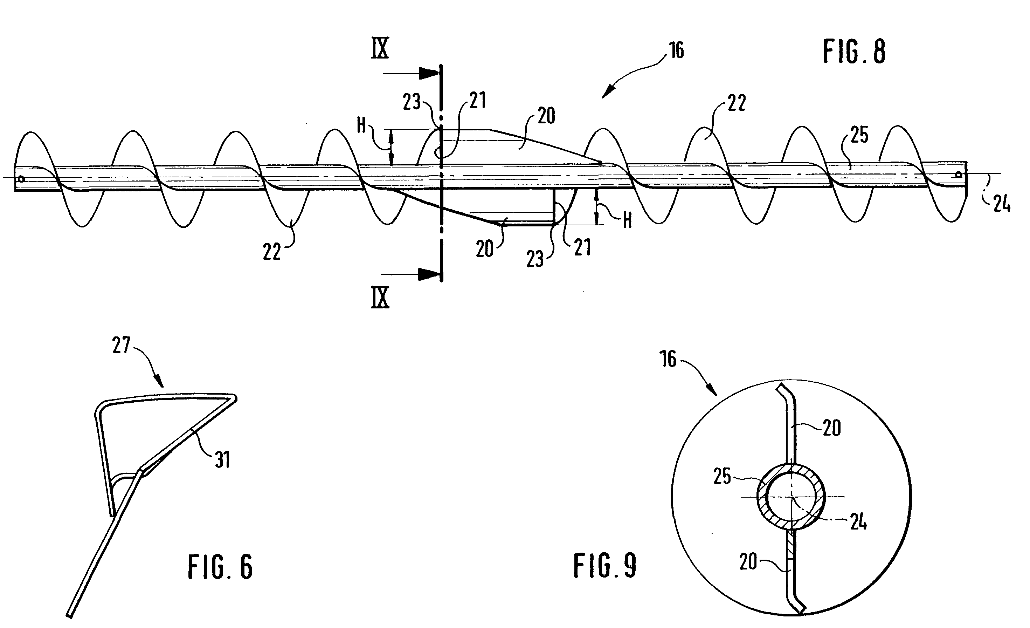

- Fig. 6: die Übergabeplatte in der Ansicht IV - IV,
- Fig. 7: die Mäh- und/oder Vertikutiereinrichtung in Prinzipdarstellung und in der Draufsicht und einem anderen Maßstab,
- Fig. 8: die Querförderschnecke in der Draufsicht und einem anderen Maßstab und
- Fig. 9: die Anordnung der Abgabeplatten an der Querförderschnecke in der Ansicht IX - IX.

Die Mäh- und/oder Vertikutiermaschine ist ein vielseitiges Gerät und läßt sich neben dem Mähen von Grünflächen auch als Vertikutier- und Aufsammelgerät einsetzen. Die Maschine weist ein Fahrwerk 1 mit den beiden angetriebenen Vorderrädern 2 und dem hinteren Pendelrad 3 auf. Die Lenkung erfolgt über die angetriebenen Vorderräder 2. An dem Rahmen 4 der Maschine ist auf dessen Rückseite der Sammelbehälter 5 angeordnet. Auf der Vorderseite der Maschine ist über das untere Lenkerpaar 6 die Mäh- und Vertikutiereinrichtung 7 in Höhenrichtung bewegbar angeordnet. Die Mäh- und Vertikutiereinrichtung 7 weist die rotierend angetriebene Mähtrommel 8 auf, an der über Halterungen 9 die Mäh- und Vertikutiermesser 10 befestigt sind. Auf der Vorderseite der Mäh- und Vertikutiereinrichtung 7 befinden sich die in Höhenrichtung einstellbaren und pendelnd angeordneten Laufräder 11, über die in Verbindung mit der hinteren Walze 12, die ebenfalls in Höhenrichtung einstellbar ist, die Mähhöhe und/oder die Vertikutiertiefe eingestellt werden kann. Über eine nicht dargestellte Aushebevorrichtung kann die Mäh- und Vertikutiereinrichtung 7 nach oben in eine Transportstellung angehoben werden.

An dem Gehäuse 13 der Mäh- und Vertikutiereinrichtung 7 ist oberhalb der Mähachse 14 der Mähtrommel 8 und hinter dem Flugkreis der Vertikutiermesser 10 in einen Fördertrog 15 die Querförderschnecke 15 angeordnet, die das von den Mäh- und Vertikutiermessern 10 gemähte und/oder vertikutierte Gut in die Förderrinne 16 der Querförderschnecke 16 werfen. Die Querförderschnecke 16 fördert das Gut von beiden Seiten der Längsförderschnecke 17 zu. Diese Förderschnecke 17 ist in einem Förderrohr 18 angeordnet, welches starr an dem Gehäuse 13 der Mäh- und Vertikutiereinrichtung 7 befestigt ist. Dieses Förderrohr 18 bildet den weiteren Lenker für die Mäh- und Vertikutiereinrichtung 7 zur Anlenkung und Führung der Mäh- und Vertikutiereinrichtung 7 gegenüber dem Rahmen 4 der Maschine. Über die Förderschnecke 17 wird das Gut in den Sammelbehälter 5 gefördert und dort verdichtet.

In dem Fördertrog 15 befindet sich in dem Bereich, in welchem die Längsförderschnecke 17 und das Förderrohr 18 der Längsförderschnecke 17 an den Fördertrog 15 anschließen, die Durchtrittsöffnung 19, damit das Gut von der Querförderschnecke 16 der Längsförderschnecke 17 zugeführt werden kann.

Damit eine bessere Übergabe des Gutes von der Querförderschnecke 16 zur Längsförderschnecke 17 erfolgt, sind im Übergabebereich des Gutes von der Querförderschnecke 16 zur Längsförderschnecke 17 die Abgabeplatten 20 angeordnet. Die Abgabeplatten 20 sind um 180° versetzt zueinander angeordnet. Hierzu sind die Enden der Schneckengänge in der Mitte der Querförderschnecke 16 um 180° versetzt zueinander angeordnet. An diesen Enden der Schneckengänge der Querförderschnecke 16 sind die Abgabeplatten 20 angeordnet. Die Abgabeplatten 20 weisen in dem an den Schneckengang anschließenden Bereich eine Höhe H auf, die der Höhe des Schneckenganges 22 entspricht. Sie verlaufen von der oberen Kante 23 des Schneckenganges 22 aus schrägabfallend in Richtung der Drehachse 24 der Querförderschnecke 16 bzw. des Schneckenrohres bzw. Schneckenwelle 25.

An den Fördertrog 15 schließt sich nach oben zwischen der Querförderschnecke 16 und der Mähtrommel 8 ein als Übergabeplatte 27 ausgebildetes Übergabeelement an. Die Übergabeplatte 27 erstreckt sich in Richtung der Mäh- und/oder Vertikutiertrommel 8 oberhalb dieser schräg nach oben. Die Übergabeplatte 27 weist in der Mitte 28 eine größere Breite als an den Außenseiten 29 auf. Die Übergabeplatte 27 weist im Übergabebereich, welcher in der Mitte 28 liegt, von der Quer- 16 zur Längsförderschnecke 17 ihre größte Breite auf. Die Übergabeplatte 27 wird durch die an dem Fördertrog 15 befestigte Frontplatte 30 gehalten und stabilisiert. Die vordere Kante 31 der Übergabeplatte 27 fällt von der Mitte 28 der Übergabeplatte 27 nach unten ab und verläuft zusätzlich schräg nach in Richtung der Querförderschnecke 16. Somit wird also der vordere Bereich der Übergabeplatte 27 kontinuierlich nach unten heruntergezogen. Somit wird also die Übergabe- und Aufsammelqualität, die bisher im seitlichen Bereich unbefriedigend war, wesentlich verbessert und optimiert. Durch die besondere Form weist die Übergabeplatte 27 am Übergabebereich 28 von Quer- 16 zur Längsförderschnecke 17 eine sehr breite und sich in den Rotorraum erstreckende Verbreiterung auf, so daß vor allem bei leichtem Mähgut, eine ausreichend große Trennstrecke des Mähgutes vom Luftstrom erreicht wird.

Die Übergabeplatte 27 kann in nicht dargestellter Weise verstellbar angeordnet sein, so daß der Zwischenraum 26 zwischen der Platte 27 und der Leithaube 27' durch Verschieben der Platte 27 veränderbar und einstellbar ist.

## Patentansprüche

1. Vertikutier- und/oder Mähmaschine (7) mit einer um eine horizontale und quer zur Fahrtrichtung rotierenden Mäh- und/oder Vertikutiertrommel (8), die das abgeschnittene und/oder aus dem Boden entfernte Gut einer in einem Fördertrog angeordneten, um eine parallel zur Vertikutiertrommel verlaufenden Drehachse rotierenden Querförderschnecke (16) zuführt, und einer sich im mittleren Bereich der Querförderschnecke (16) im Winkel von 90 Grad anschließenden Längsförderschnecke (17), wobei sich an dem Fördertrog ein die Mäh- und/oder Vertikutiertrommel und die Querförderschnecke (16) trennendes Übergabeelement (27) angeordnet ist,
dadurch gekennzeichnet, daß das Übergabeelement (27) derart angeordnet ist, daß das Gut von der Mäh- und/oder Vertikutiertrommel (8) zumindest annnähernd vollständig in den Fördertrog geworfen wird, und daß das Übergabeelement (27) im Übergabebereich (28) von der Quer- (16) zur Längsförderschnecke (17) ihre größte Breite aufweist.

2. Vertikutier- und/oder Mähmaschine nach Anspruch 1, dadurch gekennzeichnet, daß das Übergabeelement (27) aus einer Platte ausgebildet ist.

3. Vertikutier- und/oder Mähmaschine nach Anspruch 1, dadurch gekennzeichnet, daß die Übergabeplatte (27) in der Mitte (28) eine größere Breite als an den Außenseiten (23) aufweist.

4. Vertikutier- und/oder Mähmaschine nach einem oder mehreren der vorstehenden Ansprüche, dadurch gekennzeichnet, daß die Übergabeplatte (27) sich in Richtung der Mäh- und/oder Vertikutiertrommel (8) oberhalb dieser schräg nach oben erstreckt.

5. Vertikutier- und/oder Mähmaschine nach einem oder mehreren der vorstehenden Ansprüche, dadurch gekennzeichnet, daß der Zwischenraum (26) zwischen der oberen Leitplatte oder -haube (27') und der Übergabeplatte (27) durch Verschieben der Übergabeplatte (27) einstellbar ist.

6. Vertikutier- und/oder Mähmaschine nach Anspruch 1,dadurch gekennzeichnet, daß die Querförderschnecke (16) jeweils von den Außenende zur Mitte hin entgegengesetzt laufende Schneckengänge (22) aufweist, daß die Enden (21) der Schneckengänge (22) in der Mitte der Querförderschnecke (16) um 180 Grad versetzt zueinander angeordnet sind, daß an den Enden (16) jedes Schneckenganges (22) sich zumindest annähernd parallel zur Drehachse (24) der Querschnecke (16) verlaufende Abgabeplatten (20) angeordnet sind.

7. Vertikutier- und/oder Mähmaschine nach Anspruch 6, dadurch gekennzeichnet, daß die Abgabeplatten (20) im Übergabebereich des Gutes von Querschnecke (16) zur Längsförderschnecke (17) angeordnet sind.

8. Vertikutier- und/oder Mähmaschine nach Anspruch 6, dadurch gekennzeichnet, daß die Abgabeplatten (20) im Bereich des Schneckenganges (22) eine Höhe (H) aufweisen, die der Höhe (H) des Schneckenganges (22) entspricht und von der oberen Kante (23) des Schneckenganges (22) schräg abfallend angeordnet sind.

## Claims

1. Aerating and/or mowing machine (7), including a mowing and/or aerating drum (8), which rotates about a horizontal direction of travel and transversely relative thereto and supplies the material, which has been cut and/or has been removed from the ground, to a transverse screw conveyor (16) which is disposed in a conveying trough and rotates about an axis of rotation extending parallel to the aerating drum, and a longitudinal screw conveyor (17), which fits in the central region of the transverse screw conveyor (16) at an angle of 90 degrees, a transfer means (27), which separates the mowing and/or aerating drum and the transverse screw conveyor (16), being disposed on the conveying trough, characterised in that the transfer means (27) is disposed in such a manner that the material is thrown from the mowing and/or aerating drum at least approximately fully into the conveying trough, and in that the transfer means (27) has its widest width in the transfer region (28) from the transverse screw conveyor (16) to the longitudinal screw conveyor (17).

2. Aerating and/or mowing machine according to claim 1, characterised in that the transfer means (27) is formed from a plate.

3. Aerating and/or mowing machine according to claim 1, characterised in that the transfer plate (27) is wider in the centre (28) than at the external surfaces (23).

4. Aerating and/or mowing machine according to one or more of the preceding claims, characterised in that the transfer plate (27) extends inclinedly upwardly in the direction towards the mowing and/or aerating drum (8) above said drum.

5. Aerating and/or mowing machine according to one or more of the preceding claims, characterised in that the space (26) between the upper guide plate or guide cover (27') and the transfer plate (27) is adjustable by displacement of the transfer plate (27).

6. Aerating and/or mowing machine according to claim 1, characterised in that the transverse screw conveyor (16) has screw threads (22), which each run in opposite directions from the external end to the centre, in that the ends (21) of the screw threads (22) are disposed in the centre of the transverse screw conveyor (16) so as to be offset from one another by 180 degrees, and in that delivery plates (20), which extend at least approximately parallel to the axis of rotation (24) of the transverse screw (16), are disposed on the ends (21) of each screw thread (22).

7. Aerating and/or mowing machine according to claim 6, characterised in that the delivery plates (20) are disposed in the region where the material is transferred from the transverse screw (16) to the longitudinal screw conveyor (17).

8. Aerating and/or mowing machine according to claim 6, characterised in that the delivery plates (20) in the region of the screw thread (22) have a height (H) which corresponds to the height (H) of the screw thread (22), and said plates are disposed so as to incline downwardly from the upper edge (23) of the screw thread (22).

## Revendications

1. Machine à faucher et/ou à aérer (7) comprenant un tambour de fauche et/ou d'aération (8) horizontal, tournant transversalement à la direction de déplacement, qui fournit le produit coupé et/ou reposant sur le sol à une vis de transfert transversale (16) disposée dans une goulotte de transfert et tournant autour d'un axe de rotation parallèle à celui du tambour d'aération, et
une vis de transfert longitudinale (17), rejoignant le milieu de la vis de transfert transversale (16) suivant un angle de 90°,
un élément de transfert (27) étant prévu sur la goulotte de transfert et séparant le tambour de fauche et/ou d'aération et la vis de transfert transversale (16),
caractérisée en ce que
l'élément de transfert (27) est installé pour que le produit du tambour de fauche et/ou d'aération (8) soit projeté au moins pratiquement complètement dans la goulotte de transfert et,
l'élément de transfert (27) présente sa plus grande largeur dans la zone de passage (28) entre la vis de transfert transversale (16) et la vis de transfert longitudinale (17).

2. Machine à faucher et/ou à aérer selon la revendication 1,
caractérisée en ce que
l'élément de transfert (27) est formé par une plaque.

3. Machine à faucher et/ou à aérer selon la revendication 1,
caractérisée en ce que
la plaque de transfert (27) a en son milieu (28) une plus grande largeur que sur les côtés extérieurs (29).

4. Machine à faucher et/ou à aérer selon l'une ou plusieurs des revendications précédentes,
caractérisée en ce que
la plaque de transfert (27) s'étend en biais vers le haut en direction du tambour de fauche et/ou d'aération (8) et au-dessus de celui-ci.

5. Machine à faucher et/ou à aérer selon l'une ou plusieurs des revendications précédentes,
caractérisée en ce que
l'intervalle (26) entre la plaque de guidage ou capot (27') supérieure et la plaque de transfert (27) est réglable par coulissement de la plaque de transfert (27).

6. Machine à faucher et/ou à aérer selon la revendication 1,
caractérisée en ce que
la vis de transfert transversale (16) possède des filets de vis (22) partant en sens opposé des extrémités extérieures vers le milieu, les extrémités (21) des filets de vis (22) sont décalées l'une de l'autre de 180° au milieu de la vis de transfert transversale (16), et aux extrémités (16) de chaque filet de vis (22), on a des plaques de distribution (20) qui sont au moins sensiblement parallèles à l'axe de rotation (24) de la vis de transfert transversale (16).

7. Machine à faucher et/ou à aérer selon la revendication 6,
caractérisée en ce que
les plaques de distribution (20) sont prévues dans la zone de passage du produit de la vis de transfert transversale (16) à la vis de transfert longitudinale (17).

8. Machine à faucher et/ou à aérer selon la revendication 6,
caractérisée en ce que
les plaques de distribution (20) ont au niveau du filet de vis (22) une hauteur H qui correspond à la hauteur H du filet de vis (22) et descendent en biais à partir de l'arête supérieure (23) du filet de vis (22).
